## Europäisches Patentamt
## European Patent Office
## Office européen des brevets

(19)

(11) Veröffentlichungsnummer: **0 235 330**
**B1**

(12) **EUROPÄISCHE PATENTSCHRIFT**

(45) Veröffentlichungstag der Patentschrift:
**03.01.90**

(51) Int. Cl.⁴: **B62D 63/06**

(21) Anmeldenummer: **86102781.1**

(22) Anmeldetag: **04.03.86**

(54) Anhänger für Personenkraftwagen.

(43) Veröffentlichungstag der Anmeldung:
**09.09.87 Patentblatt 87/37**

(45) Bekanntmachung des Hinweises auf die Patenterteilung:
**03.01.90 Patentblatt 90/1**

(84) Benannte Vertragsstaaten:
**AT BE CH DE FR GB IT LI LU NL SE**

(56) Entgegenhaltungen:
EP-A- 0 087 504
DE-A- 3 012 567
DE-A- 3 200 792
DE-A- 3 229 062
FR-A- 1 537 596
FR-E- 89 565
GB-A- 1 400 018

**PATENTS ABSTRACTS OF JAPAN, Band 5,
Nr. 183 (M-97)[855], 21. November 1981; &
JP-A-56 103 658 (TOUKIYUU SHIYARIYOU SEIZOU
K.K.) 18-08-1981
PATENTS ABSTRACTS OF JAPAN, Band 6,
Nr. 134 (M-144)[1012], 21. Juli 1982; &
JP-A-57 58 564 (SHINMEIWA KOGYO K.K.) 08-04-1982**

(73) Patentinhaber: **Waldemar Heinemann GmbH & Co. KG,
Krombacher Strasse 41, D-5910 Kreuztal 1(DE)**

(72) Erfinder: **Heinemann, Harald, Waldstrasse 25,
D-5910 Kreuztal(DE)**
Erfinder: **Heinemann, Michael,
Schneeweissdornstrasse 5, D-5910 Kreuztal(DE)**

(74) Vertreter: **Missling, Arne, Dipl.-Ing., Patentanwälte
Dipl.-Ing. R. Schlee Dipl.-Ing. A. Missling
Bismarckstrasse 43, D-6300 Giessen(DE)**

ACTORUM AG

## Beschreibung

Die Erfindung bezieht sich auf einen Anhänger für Personenkraftwagen mit einem Wagenkasten gemäß dem Oberbegriff von Anspruch 1.

Ein Anhänger dieser Art hat einen selbsttragenden Kasten, da die Bordwände stabile Längsträger bilden und durch die Verbindung der Bordwand mit dem Boden und der Bordwände untereinander auch eine grobe Verwindungssteifigkeit erzielt wird. Dadurch lassen sich die Herstellungskosten und das Leergewicht wesentlich herabsetzen.

Bei einem bekannten Anhänger (DE-Al-32 29 062) bestehen die Bordwände aus Aluminium-Strangpreßprofilen. Solche Profile sind relativ teuer. Bekannt sind ferner Fahrzeug-Ladungswände gemäß, DE-Al-3 012 567, die untere und obere Längsrandprofile aufweisen, welche zu einem Zwischenteil hin umgewalzt und mit ihm verschweißt sind. Die Längsrandprofile sind allgemein mit flachen, trapezförmigen Kanälen ausgebildet, so daß Versteifungskanten bzw. - Rippen vorhanden sind, welche zur Steifigkeit des Aufbaues beitragen. Allerdings dient zu seiner Herstellung eine Walzvorrichtung, mit der das Profilblech nach Art des Tiefziehens bearbeitet wird, um die Kanten zu erzeugen, was grundsätzlich mit einer Querschnitts-Schwächung einhergeht und deshalb wirtschaftlich nur mit dickeren, genügend weichen Blechen durchführbar ist.

Der Erfindung liegt die Aufgabe zugrunde, einen Anhänger der eingangs genannten Art so auszubilden, daß er in einfacher Weise und mithin billig herstellbar ist, und zwar unter Verwendung möglichst einfacher Bauteile. Der Wagenkasten soll große Festigkeit, Steifigkeit und Korrosionsbeständigkeit besitzen.

Diese Aufgabe wird nach der Erfindung dadurch gelöst, daß die Bordwände gemäß dem kennzeichnenden Teil von Anspruch 1 längs dem oberen und dem unteren Rand jeweils Kanäle aufweisen, während der dazwischenliegende Bordwandbereich einwandig ist und sich am unteren Rand jeder Bordwand ein starr mit dieser verbundener Falz zum Umgreifen des zugeordneten Bodenrandes befindet. Diese Ausbildung ist in statischer Hinsicht besonders vorteilhaft, da die Bordwand ähnlich einem I-Träger einen Obergurt, einen Untergurt und dazwischenliegend einen Steg aufweist. Auch für den Gebrauch ist diese Formgestaltung günstig, da die Bordwände an ihren oberen Rändern relativ breit sind. Die benutzten einteiligen Profile aus verzinktem Stahlblech lassen sich bei entsprechender Massenproduktion relativ billig herstellen und sind außerordentlich robust. Der erfindungsgemäße Anhänger ist deshalb besonders für rauhen Betrieb geeignet, z.B. auch für den Transport von Baumaterialien und dergleichen. Der Aufbau hat ein gutes Aussehen und ist leicht zu pflegen. Sehr vorteilhaft ist, daß der Wagenkasten durch den randübergreifenden Bodenfalz bestens nach außen abgedichtet wird, was für die Anwendungsfälle der Praxis oft von großer Bedeutung ist.

Der mittlere Bordwandbereich ist vorzugsweise mittels Längssicken verstärkt (Anspruch 2). Diese Sicken haben vorzugsweise einen trapezförmigen Querschnitt (Anspruch 3).

Die Kanäle der Bordwände sind bevorzugt durch eine Überlappung des Bleches geschlossen, wobei im Überlappungsbereich eine Verbindung vorgesehen ist, die insbesondere gemäß Anspruch 5 durch Punktschweißungen hergestellt werden kann. Im Überlappungsbereich kann gemäß Anspruch 5 eine Verkröpfung vorgesehen sein, wodurch das unerwünschte Vorstehen einer Blechkante vermieden und zusätzlich die Steifigkeit des Profiles erhöht wird.

Vorzugsweise ist laut Anspruch 7 eine Wand des Falzes durch eine Doppelung des Profilbleches gebildet. Zur Verbindung zwischen Boden und Bordwänden sind Durchsteckschrauben gemäß Anspruch 8 besonders vorteilhaft. Diese Schrauben werden durch einzelne Löcher in der Bordwand hindurchgeführt, während bei der eingangs erwähnten bekannten Konstruktion mit Strangpreßprofilen hierfür ein durchgehender Schlitz erforderlich ist. Durch die Verwendung von Druckstücken gemäß Anspruch 9 wird einmal eine gute Einleitung der Schraubenkräfte in die Bordwand erzielt und zum anderen auch die Montage erleichtert, indem die Muttern vorzugsweise undrehbar an den Druckstücken gehalten sind.

Es ist vorteilhaft, die Innenseite der Bordwände gemäß Anspruch 10 im wesentlichen eben auszubilden, da dadurch das Beladen des Kastens erleichtert wird. Dabei befinden sich die Kanäle an den Außenseiten der Bordwände.

Besonders günstig ist ein Kanalquerschnitt, wie er im Anspruch 11 definiert ist. Man erhält dadurch eine obere ebene Endfläche und mit schrägen Kanalwänden eine gute Einleitung von Kräften in den Wandbereich, der zwischen den Kanälen liegt. Letztere können an ihren Enden eine geringere Breite haben, wobei der reduzierte Bereich von Eckprofilen umgriffen ist (Anspruch 12). Dies ermöglicht die Verwendung gleicher Eckprofile sowohl für Anhänger, deren Bordwände aus Aluminium-Strangpreßprofilen bestehen, die dünner sind als die Kanäle der Bordwände aus Stahlprofilen gemäß der vorliegenden Erfindung. Verformungstechnisch ist es unproblematisch, Stahl-Bordwände in der Breite zu reduzieren, während dies bei Aluminium-Strangpreßprofilen kaum möglich ist.

In einer weiteren Ausgestaltung sind Füllbleche gemäß Anspruch 13 vorgesehen. Dadurch erreicht man eine Abdichtung in den Eckbereichen des Wagenkastens auch dann, wenn die Bordwände stark profiliert sind.

Für die Bordwände genügt relativ dünnes Blech, wie in Anspruch 14 angegeben. Besonders zweckmäßig ist eine Blechdicke von 1, 25 mm .

In der Zeichnung ist ein Ausführungsbeispiel der Erfindung dargestellt. Es zeigen:

Fig. 1 eine Seitenansicht eines Anhängers entsprechend dem Pfeil I in Fig. 2,

Fig. 2 einen Grundriß des Anhängers entsprechend dem Pfeil II in Fig. 1 in einem gegenüber Fig. 1 verkleinerten Maßstab,

Fig. 3 einen teilweisen Horizontalschnitt nach Li-

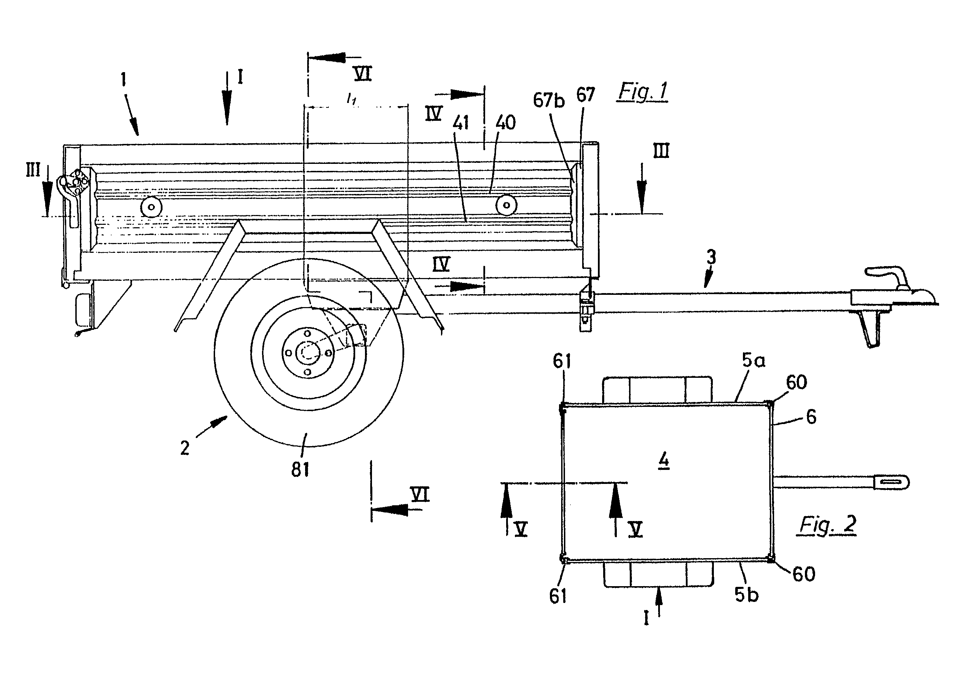

nie III-III in einem gegenüber Fig. 1 vergrößerten Maßstab,

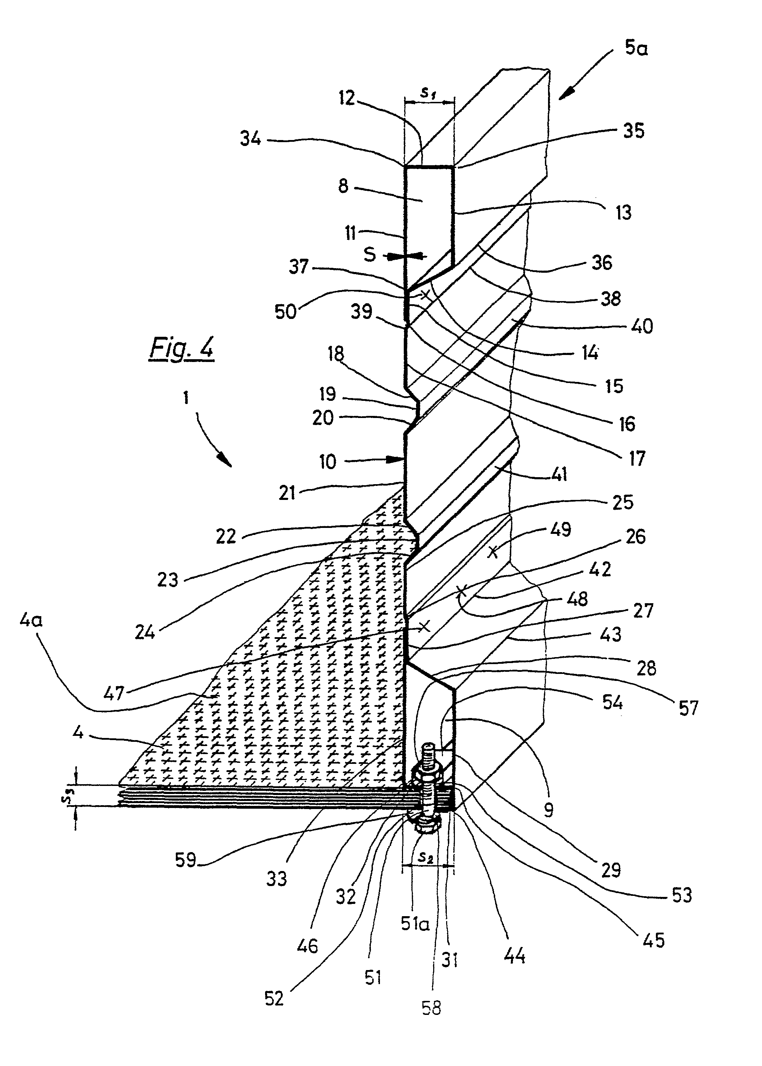

Fig. 4 einen teilweisen Vertikalschnitt nach Linie IV-IV in Fig. 1, jedoch in einer gegenüber Fig. 1 vergrößerten Darstellung und ergänzt zu einer perspektivischen Zeichnung,

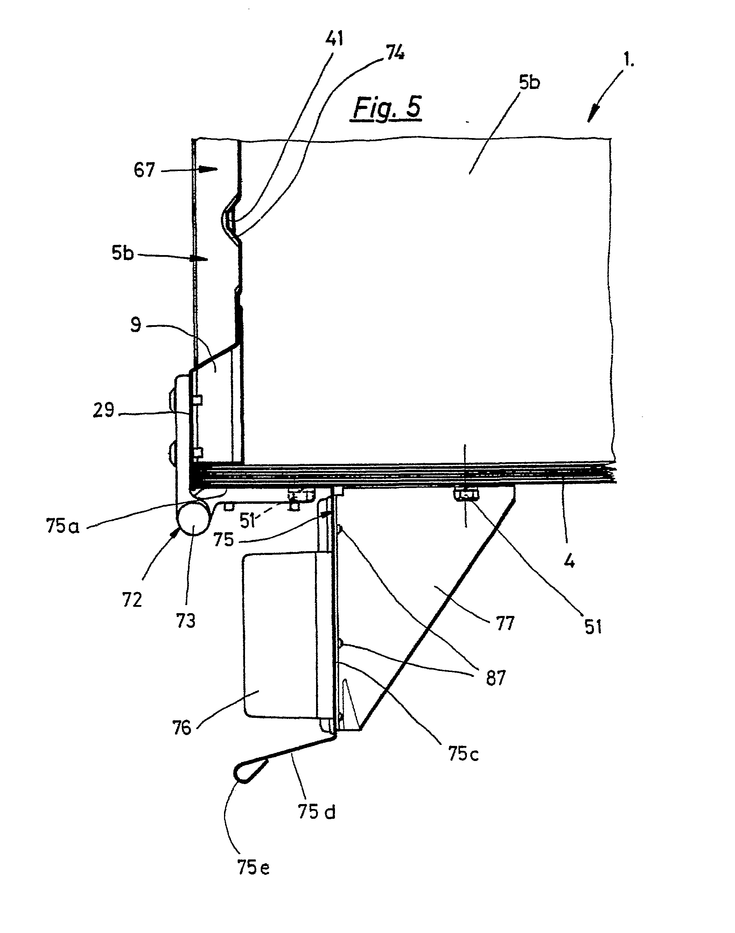

Fig. 5 einen Vertikalschnitt im hinteren Bereich des Wagenkastens entsprechend der Linie V-V in Fig. 2,

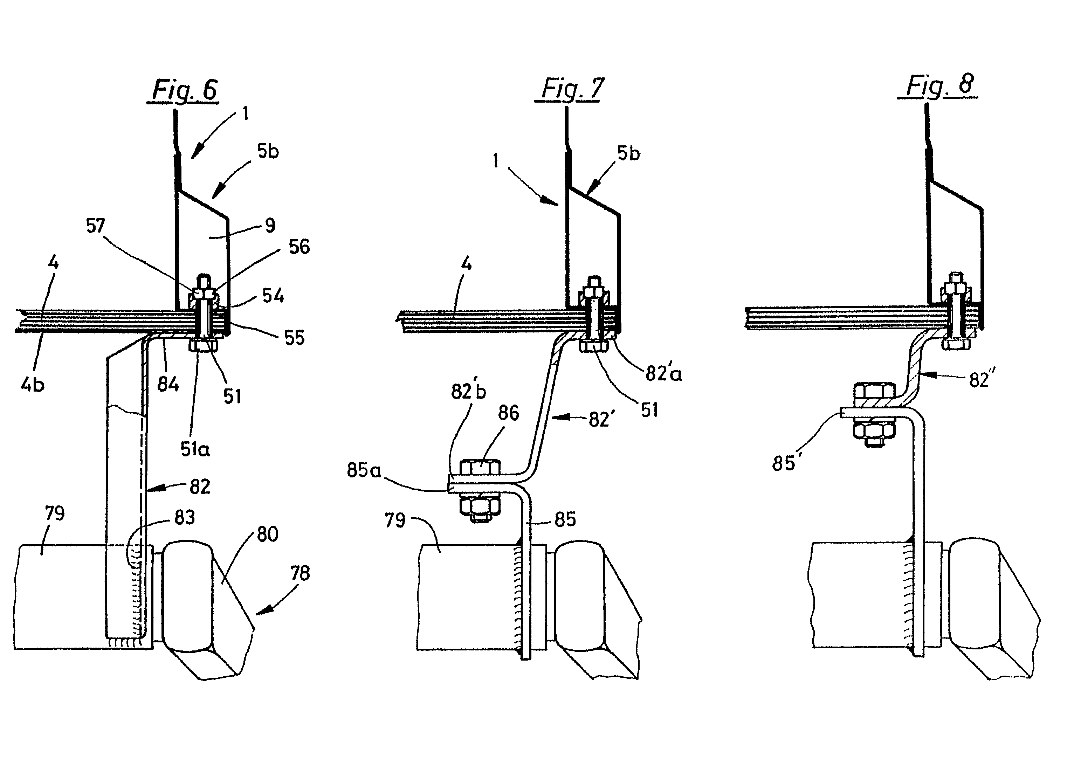

Fig. 6 einen teilweise Vertikalschnitt im Bereich der Achsaufhängung entsprechend der Linie VI-VI in Fig. 1 und

Fig. 7 und 8 Vertikalschnitte entsprechend Fig. 6 bei anderen Ausführungsformen der Erfindung.

Der Anhänger hat einen Wagenkasten 1, ein Fahrgestell 2 und eine Deichsel 3. Der Wagenkasten besteht aus einem Boden 4, zwei Seitenwänden 5a und 5b, einer fest angeordneten Vorderwand 6 und einer abklappbaren Rückwand 7. Zunächst soll der Aufbau des Wagenkastens betrachtet werden.

Alle Wände 5a, 5b, 6, 7 haben das gleiche Profil, das in Fig. 4 dargestellt ist. Alle Wände 5a, 5b, 6, 7 sind aus verzinktem Stahlblech hergestellt. Das Profil hat einen oberen Kanal 8, einen unteren Kanal 9 und einen einwandigen Zwischenbereich 10. An dem Profil lassen sich Abschnitte 11 bis 33 unterscheiden. Unter Heranziehung der in Fig. 4 eingetragenen Profilabschnitte wird das Profil nachfolgend im einzelnen beschrieben.

Der Profilabschnitt 11 geht über eine rechtwinklige Abkantung 34 in den horizontalen Profilabschnitt 12 über. Dieser geht wieder über eine rechtwinklige Abkantung 35 in den Profilabschnitt 13 über, der zum Profilabschnitt 11 parallel ist. Der Profilabschnitt 13 geht über eine stumpfwinklige Abkantung 36 in den Profilabschnitt 14 über, der seinerseits über eine stumpfwinklige Abkantung 37 in den Profilabschnitt 14 übergeht. Der Profilabschnitt 14 ist zum unteren Randbereich des Profilabschnittes 11 parallel. Die Profilabschnitte liegen in diesem Bereich ohne Abstand aneinander. Der Profilabschnitt 15 geht über eine Abkantung 38 in den sehr kurzen Profilabschnitt 16 über, der über eine weitere Abkantung 39 in den Profilabschnitt 17 einmündet. Die Abkantungen 38, 39 und der Profilabschnitt 16 bilden eine Verkröpfung um die Dicke $s$ des Bleches, aus dem das Profil hergestellt ist. Die Profilabschnitte 18, 19, 20, die jeweils über stumpfwinklige Abkantungen ineinander übergehen, bilden eine obere Längssicke 40 von trapezförmigem Querschnitt. Eine dazu parallele untere Längssicke 41, die den gleichen Querschnitt hat wie die Dicke 40, besteht aus den Profilabschnitten 22, 23, 24.

Der Profilabschnitt 26 ist wieder Bestandteil einer Verkröpfung um die Blechdicke. Der Profilabschnitt 27 geht wieder über eine stumpfwinklige Abkantung 42 in den Profilabschnitt 28 über, der über eine weitere stumpfwinklige Abkantung 43 in den Profilabschnitt 29 übergeht. Die Profilabschnitte 29, 31 gehen über eine 180°-Abkantung 44 ineinander über, während an den Profilabschnitt 31 über eine rechtwinklige Abkantung 45 der Profilabschnitt 32 anschließt. An diesen schließt über eine rechtwinklige Abkantung 46 der Profilabschnitt 33 an, der zum Profilabschnitt 29 parallel ist. Der obere Randbereich des Profilabschnittes 33 liegt ohne Abstand am Profilabschnitt 27 an. Die ohne Abstand aneinanderliegenden Bereiche des Bleches sind über Punktschweißungen 47, 48, 49 miteinander verschweißt. Ebenfalls sind die aneinanderliegenden Abschnitte 11 und 15 durch Punktschweißungen 50 miteinander verbunden.

Die Profilabschnitte 31 und 32 bilden zusammen einen Falz von der Breite $s_2$ für den Eingriff des Bodens 4, der die Dicke $s_3$ hat. Die Breite der Kanäle 8 und 9, gemessen an ihrer Außenseite, ist mit $s_1$ bezeichnet. Die Dicke $s$ des Bleches beträgt vorzugsweise 1,25 mm.

Der Boden 4 ist mit den Seitenwänden 5a und 5b und mit der vorderen Querwand 6 durch Schrauben 51 verbunden. Jede Schraube 51 durchgreift ein Durchgangsloch 52 im Boden 4 und ein Durchgangsloch 53 in der unteren Wand 32 des unteren Kanales 9. Im Kanal 9 ist (siehe dazu z.B. auch Fig. 6) ein Einlegestück 54 vorgesehen, das seinerseits ein Durchgangsloch 55 aufweist. In jedem Einlegestück 54 befindet sich eine Vertiefung 56 für die Aufnahme einer Schraubenmutter 57. Die Vertiefung ist sechskantig, so daß die sechskantige Mutter 57 undrehbar in dem Einlegestük 54 gehalten ist.

Die Schrauben 51 sind Kopfschrauben, z.B. mit einem Sechskantkopf 51a. Zwischen dem Schraubenkopf 51a und dem Boden 4 ist an jeder Schraube ein Federring 58 und eine Unterlegscheibe 59 angeordnet. Dadurch wird ein Losdrehen der Schraube verhindert und durch die Unterlegscheibe 59 eine Beschädigung des Bodens 4 vermieden.

Der Boden 4 besteht vorteilhafterweise aus einer größeren Zahl von miteinander verleimten Holzschichten. Die Oberseite 4a ist aufgerauht, um dem Boden rutschfest zu machen. Vorzugsweise ist der Boden mit einem Kunstharz, vorzugsweise Phenol-Harz, beschichtet.

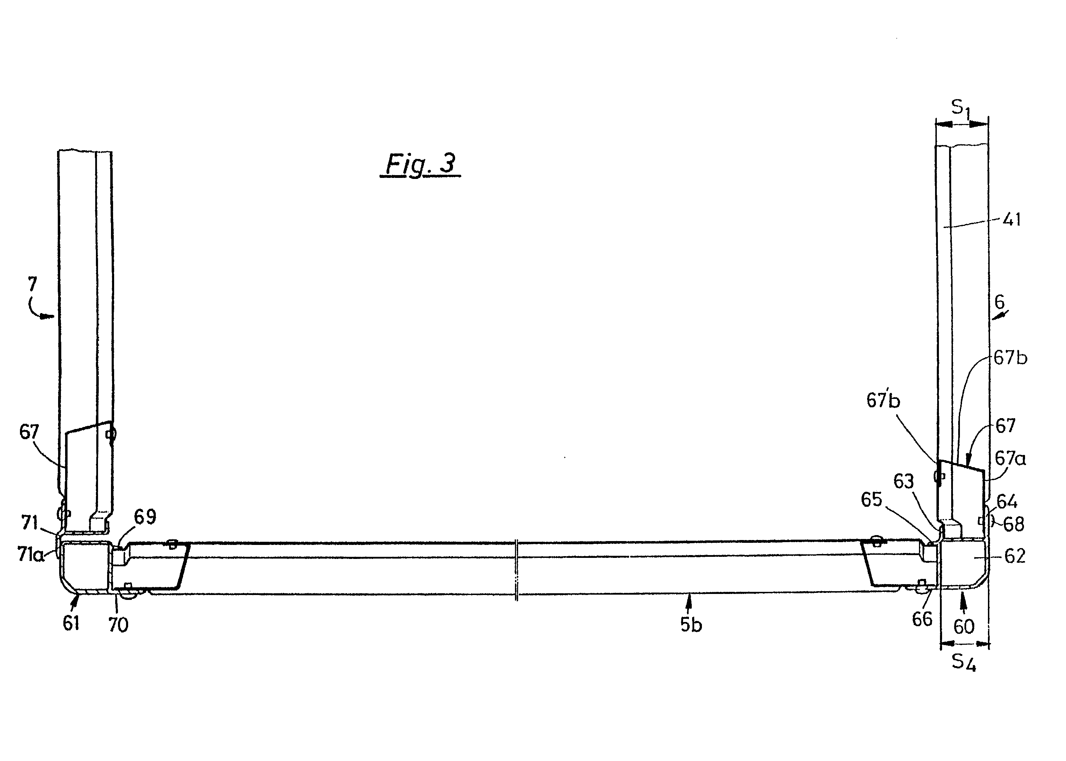

An den vorderen Ecken des Wagenkastens 1 sind Pfosten 60 und an den hinteren Ecken Pfosten 61 angeordnet (siehe Fig.2), deren Querschnitte aus Fig. 3 ersichtlich sind. Die Pfosten 60 sind Hohlprofile mit einer Höhlung 62. Von dem kastenförmigen, die Höhlung 62 enthaltenden Teil des Pfostens ragen Rippen 63, 64 bzw. 65, 66 ab. Die Rippenpaare 63/64 und 65/66 umfassen die Enden der Bordwände. Die Bordwände sind an ihren Enden durch Verquetschen so verformt, daß die Kanäle 8, 9 in ihren Endbereichen eine Breite $s_4$ aufweisen, die geringer ist als die volle Breite $s_1$ der Kanäle. Der lichte Abstand zwischen Rippenpaaren 63/64 bzw. 65/66 ist so, daß die Enden der Kanäle zwischen die Rippen eingeführt werden können. Es ist dadurch möglich, gleiche Pfostenprofile zu verwenden, unabhängig davon, ob die Bordwände aus Aluminium-Strangprofilen bestehen, die schmäler sind als die Breite $s_1$ der Kanäle 8, 9 oder ob Bordwände gemäß der vorliegenden Erfindung verwendet werden.

Zur Abdichtung des Wagenkastens in den Eckbereichen sind winkelförmige Füllbleche 67 vorgesehen. Die Füllbleche haben einen Schenkel 67a, der mit der Rippe 64 verbunden ist, wofür gleiche Nieten 68 verwendet sind, mit denen auch die Rippe 64 mit der Bordwand 6 verbunden ist. Ein zweiter Schenkel 67b hat eine solche Ausbildung seines Randes 67'b, daß sich dieser an die äußeren Unebenheiten der Bordwand, nämlich an die Sicken 40, 41 anpaßt. Diese Anpassung ist aus Fig. 1 zu ersehen.

Am hinteren Ende des Wagenkastens 1 befinden sich etwas anders gestaltete Pfosten 61. Diese haben nur zwei Rippen 68, 70 zum Umfassen der Längswände. Die hintere Wand 7, die abklappbar ist, wird naturgemäß nicht am Pfosten fixiert. Diese Bordwand hat an ihren seitlichen Enden Profile 71, die einen Anschlag 71a zum Anschlagen an den Pfosten 61 aufweisen. Aus Fig. 5 ist ersichtlich, wie die Rückwand 5b des Wagenkastens mittels Beschlägen 72 gehalten ist. Die Beschläge 72 haben ein Gelenk 73 und sind sowohl an der Unterseite des Kastenbodens 4 als auch an der Rückwand 5b befestigt, und zwar an der Außenwand 29 des unteren Kanales 9. Auch an der Rückwand sind Füllbleche 67 vorgesehen. In Fig. 5 ist ebenfalls die Anpassung der Füllbleche an die Sicken dargestellt. Ein entsprechender Ausschnitt 74 im Füllblech ist erkennbar.

Am hinteren Ende des Bodens 4 ist eine insgesamt mit 75 bezeichnete Traverse angeordnet. Die Traverse 75 hat eine waagerechte Wand 75a, die an der Unterseite des Kastenbodens 4 anliegt, eine senkrechte, nach unten vom Kastenboden 4 abragende Wand 75c und eine Wand 75d, die stumpfwinklig an die Wand 75c anschließt und nach hinten ragt. Zur Vermeidung einer schargen Kante ist am Ende der Wand 75d durch Umbiegen des Bleches eine Abrundung gebildet. Die Traverse wird ebenfalls von Schrauben 51 durchgriffen, so daß mit diesen Schrauben auch die Traverse mit den Seitenwänden 5a, 5b verbunden wird. Zur Absteifung der Traverse gegenüber dem Wagenkasten dienen dreieckige Bleche 77, die mit der vertikalen Wand 75c durch Niete 87 verbunden ist. Die Traverse 75 dient auch als Träger für Rückleuchten 76 und für ein Nummernschild.

Das Fahrgestell 2 hat eine insgesamt mit 78 bezeichnete Achse. Die Achse 78 hat ein Rohr 79, das sich unterhalb des Wagenkastens 1 erstreckt. Im Rohr 79 sind Schwingarme 80 gelagert, die gegenüber dem Rohr 79 abgefedert sind. An den Enden der Schwingarme 78 sitzen Laufräder 81. Die Achse 78 ist mittels Achsböcken 82 mit dem Wagenkasten 1 verbunden.

Fig. 6 zeigt eine Ausführungsform, bei der jeder Achsbock 82 unmittelbar mit dem Rohr 79 verschweißt ist (Schweißnaht 83). Der Achsbock 82 hat einen oberen horizontalen Flansch 84, der an der Unterseite 4b des Wagenkastenbodens 4 anliegt. Der Flansch 84 ist von einer Schraube 51 durchgriffen, die in gleicher Weise in die Seitenwand 5b eingeschraubt ist, wie dies anhand der Fig. 4 erläutert wurde und die demgemäß zugleich als Bodenbefestigungsschraube wirksam ist. Der Befestigungsflansch 84 ist verhältnismäßig lang. Seine Länge $l_1$ (siehe Fig. 1) beträgt mindestens 150 mm. Man erhält dadurch eine günstige Einleitung der Stützkräfte in die Wände 5a und 5b.

Bei der Variante gemäß Fig. 7 ist der hier mit 82' bezeichnete Achsbock als Z-Profil ausgebildet, das durch Abkanten eines Bleches gebildet ist. Der Achsbock hat einen oberen Flansch 82'a, der mit dem Wagenkasten 1 verschraubt ist und einen unteren Flansch 82'b. An dem Achsrohr 79' ist ein Blech 85 angeschweißt, das einen oberen horizontalen Schenkel 85a hat, der am Schenkel 82'b des Achsbockes 82' anliegt und mit diesem mittels Schrauben 86 verschraubt ist. Auch bei der Ausführungsform nach Fig. 7 ist der Achsbock 82' mittels einer Schraube 51 befestigt, mit der zugleich die Wand 5b am Kastenboden 4 befestigt ist.

Die Ausführungsform nach Fig. 8 unterscheidet sich von der Ausführungsform nach Fig. 7 dadurch, daß der Achsbock 82'' kürzer ausgebildet ist als der Achsbock 82' nach Fig.7. In beiden Fällen sind die Achsböcke Z-förmig gebogene Bleche. Die Konstruktion nach den Fig. 7 und 8 hat den Vorteil, daß die Höhe des Anhängers bequem geändert werden kann. Entweder kann man Achsen mit verschieden hoch liegenden Flanschen 85a, 85'a verwenden oder aber die Achsen einheitlich gestalten und die Achsböcke 82', 82'' entsprechend abändern. In der Zeichnung sind beide Varianten gemeinsam dargestellt.

Durch die feste Verbindung der Wände 5a, 5b und 6, die ja eine hohe Steifigkeit haben, einerseits mit dem Boden 4 und andererseits untereinander an den vorderen Pfosten 60, wird eine stabile selbsttragende Einheit geschaffen. Wenn man auch die Rückwand 7 fest einbauen würde (in gleicher Weise wie die Vorderwand 6), hätte die als Winkelblech ausgebildete Traverse 75 für die Erzielung einer hohen Festigkeit keine nennenswerte Aufgabe. Wenn jedoch die Rückwand 7 abklappbar ist, wie dargestellt, kommt der Traverse für die Festigkeit des Wagenkastens 1 erhöhte Bedeutung zu.

## Patentansprüche

1. Anhänger für Personenkraftwagen mit einen Wagenkasten (I), der einen rechteckigen Boden (4) und von den Bodenkanten sich erhebende Bordwände (5a, 5b, 6, 7) aufweist, die aus einteiligen Profilen insbesondere aus verzinktem Stahlblech bestehen, wobei die seitlichen Bordwände (Seitenwände 5a, 5b) und mindestens eine quer dazu verlaufende Bordwand (Querwand 6) unmittelbar mit dem Boden (4) verschraubt sind und die Gesamtheit aus Boden (4), Seitenwänden (5a, 5b) und Querwand (6) unter Verzicht auf Längsträger eine selbsttragende Einheit bilden, dadurch gekennzeichnet, daß jede Bordwand (5a, 5b, 6, 7) längs ihrem oberen und ihrem unteren Rand einen Kanal (8, 9) aufweist, daß der zwischen den Kanälen (8, 9) liegende mittlere Bordwandbereich (10) einwandig ist, und daß am Rand jeder Bordwand (5a, 5b, 6, 7) ein starr mit dieser verbundener Falz (31, 33) zum Umgreifen des zugeordneten Bodenrandes vorgesehen ist.

2. Anhänger nach Anspruch 1, dadurch gekennzeichnet, daß der mittlere Bordwandbereich (10) Sicken (40, 41) aufweist, die sich parallel zu den Kanälen (8, 9) erstrecken und die vorzugsweise nach der Außenseite der Bordwände (5a, 5b, 6, 7) vorragen.

3. Anhänger nach Anspruch 2, dadurch gekennzeichnet, daß die Sicken (40, 41) einen trapezförmigen Querschnitt haben.

4. Anhänger nach einem der Ansprüche 1 bis 3, dadurch gekennzeichnet, das die Kanäle (8, 9) durch eine Überlappung des Bleches geschlossen sind, wobei im Überlappungsbereich (11/15, 27/33) eine Verbindung , 47, 48, 49, 50) zwischen den aufeinanderliegenden Blechlagen vorgesehen ist.

5. Anhänger nach Anspruch 4, dadurch gekennzeichnet, daß am Rand des Überlappungsbereiches eine Verkröpfung (16, 26) des Profiles etwa um die Dicke des Stahlbleches vorgesehen ist, die den Rand des Bleches übergreift.

6. Anhänger nach Anspruch 4 oder 5, dadurch gekennzeichnet, daß die Verbindung aus Punktschweißungen (47, 48, 49, 50) besteht.

7. Anhänger nach einem der Ansprüche 1 bis 6, dadurch gekennzeichnet, daß die obere Falzwand (32), an der die Oberseite (4a) des Boden (4) anliegt, durch die Unterseite des unteren Kanales (9) und die seitliche Falzwand (31), an der die Bodenseitenfläche anliegt, durch eine Doppelung (31, 29) des Stahlbleches gebildet ist.

8. Anhänger nach einem der Ansprüche 1 bis 7, dadurch gekennzeichnet, das zur Befestigung des Boden (4) Durchsteckschrauben (51) dienen, die Löcher (52, 53) im Boden und in der unteren Wand (32) des unteren Kanales (9) durchgreifen und mit im Kanalinneren befindlichen Muttern (57) verschraubt sind.

9. Anhänger nach Anspruch 8, dadurch gekennzeichnet, daß die Muttern (57) auf im Kanalinneren befindlichen Druckstücken (54) aufliegen, wobei die Muttern (57) an diesen Druckstücken (54) vorzugsweise undrehbar gehalten sind.

10. Anhänger nach einem der Ansprüche 1 bis 9, dadurch gekennzeichnet, daß die Innenseite der Bordwände (5a, 5b, 6, 7) im wesentlichen eben ist und die Kanäle (8, 9) nach der Außenseite der Bordwände (5a, 5b, 6, 7) vorragen.

11. Anhänger nach einem der Ansprüche 1 bis 10, dadurch gekennzeichnet, daß die Kanäle (8, 9) parallele Kanal-Seitenwände (11, 13 bzw. 29, 33) haben, die parallel zur allgemeinen Bordwandebene sind, daß der obere Kanal (8) eine obere (12) und der untere Kanal (9) eine untere Kanalwand (32) aufweisen, die rechtwinklig zur allgemeinen Bordwandebene verlaufen, und daß der oberen Kanalwand (12) sowie der unteren Kanalwand (32) jeweils eine schräge Kanalwand (14, 28) gegenüberliegt, die mit der äußeren Kanal-Seitenwand (13, 29) einen stumpfen Winkel einschließt.

12. Anhänger nach einem der Ansprüche 1 bis 11, dadurch gekennzeichnet, daß die Kanäle (8, 9) an den Enden auf eine geringere Breite reduziert und in dem reduzierten Bereich von Eckprofilen (60, 61) umgriffen sind.

13. Anhänger nach einem einem der Ansprüche 1 bis 12, dadurch gekennzeichnet, daß in den Eckbereichen Füllbleche (67) vorgesehen sind, die mit einer Wand (67a) an den Eckprofilen (60, 61) anliegen, die rechtwinklig zueinander stehende Bordwände verbinden und die mit der mit der Endkante (67'b) einer weiteren Wand (67b) an die Außenkontur der Bordwände angepaßt sind.

14. Anhänger nach einem der Ansprüche 1 bis 13, dadurch gekennzeichnet, daß die Blechdicke (s) der Bordwände im Bereich von 0, 8 bis 1, 5 mm liegt, vorzugsweise bei ca 1,25 mm.

**Claims**

1. Trailer for passenger motor vehicles, with a vehicle body (1) which has a rectangular floor (4) and side- and end- walls (5a, 5b, 6, 7) which rise from the floor edges and which consist of one-piece profiles, made in particular of galvanised steel sheet, and wherein the lateral side walls (side walls 5a, 5b) and at least one end wall (end wall 6) extending transversely thereto, are screwed directly to the floor (4), and the entirety which consists of floor (4), side walls (5a, 5b), and transverse wall (6), form a self supporting unit which dispenses with longitudinal supports, characterised in that each of the side- and end- walls (5a, 5b, 6, 7) has along its upper and its lower edge a channel (8, 9); that the central side- and end- wall region (10) lying between the channels (8, 9) is single-walled, and that on the edge of each side- and end- wall (5a, 5b, 6, 7), there is a fold (31, 32) which is rigidly connected with the said wall and is provided for engaging around the associated floor edge.

2. Trailer according to claim 1, characterised in that the central side- and end- wall region (10) has grooves (40, 41) which extend parallel to the channels (8, 9) and which preferably project out towards the exterior side of the side- and end- walls (5a, 5b, 6, 7).

3. Trailer according to claim 2, characterised in that the grooves (40, 41) have a trapezoidal shaped cross section.

4. Trailer according to any one of the claims 1 to 3, characterised in that the channels (8, 9) are closed by overlapping of the sheet metal, wherein in the region of overlapping (11/15, 27/33) a connection (47, 48, 49, 50) is provided between the superimposedly arranged layers of sheet metal.

5. Trailer according to claim 4, characterised in that on the edge of the region of overlapping, a shoulder (16, 26) of the profile is provided, which is approximately of the same thickness as the steel sheet and which engages over the edge of the sheet.

6. Trailer according to claim 4 or 5, characterised in that the connection consists of spot-welds (47, 48, 49, 50).

7. Trailer according to any one of the claims 1 to 6, characterised in that the upper wall fold (32), against which the upper side (4a) of the floor (4) lies, is formed by the underside of the lower channel (9), and the lateral wall fold (31), against which the side surface of the floor lies, is formed by a doubling (31, 29) of the steel sheet.

8. Trailer according to any one of the claims 1 to 7, characterised in that for securing the floor (4), through-bolts (51) are provided. which engage through holes (52, 53) in the floor and in the lower wall (32) of the lower channel (9), and which are screwed-tight by means of nuts (57) which are located in the interior of the channel.

9. Trailer according to claim 8, characterised in that the nuts (57) lie on thrust pieces (54) which are located in the interior of the channel, the nuts (57) being held on these thrust pieces (54) preferably in non-rotatable manner.

10. Trailer according to any one of the claims 1 to 9, characterised in that the inner side of the side- and end- walls (5a, 5b, 6, 7) is substantially plane, and the channels (8, 9) project out towards the exterior side of the side- and end- walls (5a, 5b, 6, 7).

11. Trailer according to any one of the claims 1 to 10, characterised in that the channels (8, 9) have parallel channel side walls (11, 13 and/or 29, 33) which are parallel to the general side- and end- wall plane; that the upper channel (8) has an upper channel wall (12) and the lower channel (9) has a lower channel wall (32), these channel walls extending at right angles to the general side- and end- wall plane; and that the upper channel wall (12) and also the lower channel wall (32) in each case lies opposite a sloping channel wall (14, 28) which together with the outside channel side wall (13, 29) encloses an obtuse angle.

12. Trailer according to any one of the claims 1 to 11, characterised in that the channels (8, 9) are reduced to a lesser width at the ends, and are gripped around by angled profiles (60, 61) in the reduced region.

13. Trailer according to any one of the claims 1 to 12, characterised in that in the corner regions, metal filler-sheets (67) are provided, which lie with one wall (67a) against angled profiles (60, 61) and which connect side- and end- walls that stand at a right angle to one another, and which, with the end edge (67'b) of a further wall (67b) are adapted to fit the exterior contour of the side- and end- walls.

14. Trailer according to any one of the claims 1 to 13, characterised in that the sheet metal thickness (s) of the side- and end- walls lies in the range from 0.8 to 1.5 mm, and preferably amounts to about 1.25 mm.

**Revendications**

1. Remorque pour voiture de tourisme, comprenant une caisse de carrosserie (1), qui présente un fond rectangulaire (4) et des parois de côté (5a, 5b; 6, 7), lesquelles s'élèvent à partir des arêtes du fond et sont constituées par des pièces profilées d'un seul tenant, en particulier en tôle d'acier galvanisée, les parois latérales (parois latérales 5a, 5b) et au moins une paroi de côté dirigée, par rapport à elles, dans le sens transversal (paroi transversale 6), étant directement vissées dans le fond (4), et l'ensemble du fond (4), des parois latérales (5a, 5b) et de la paroi transversale (6) constituant, une unité autoporteuse, en l'absence de supports longitudinaux, caractérisée en ce que chaque paroi de côté (5a, 5b, 6, 7) présente un canal (8, 9) le long de sa bordure supérieure et le long de sa bordure inférieure ; en ce que la région moyenne (10), située entre les canaux (8, 9), de la paroi de côté comporte une seule épaisseur; et en ce qu'il est prévu, au bord de chaque paroi de côté (5a, 5b, 6, 7), un repli (31, 32) qui lui est rigidement attaché pour venir en prise avec le bord correspondant du fond.

2. Remorque selon la revendication 1, caractérisée en ce que la région moyenne (10) de la paroi de côté comporte des moulures (40, 41); qui s'étendent parallèlement aux canaux (8, 9) et font saillie de préférence du côté extérieur des parois de côté (5a, 5b, 6, 7).

3. Remorque selon la revendication 2, caractérisée en ce que les moulures (40, 41) ont une section transversale trapézoïdale.

4. Remorque selon l'une des revendications 1 à 3, caractérisée en ce que les canaux (8, 9) sont fermés par un recouvrement de la tôle, une jonction (47, 48, 49, 50) étant prévue entre les couches de tôle qui se recouvrent.

5. Remorque selon la revendication 4, caractérisée en ce qu'il est prévu, sur le bord de la région de recouvrement décalage (16, 26) de la pièce profilée, sensiblement de l'épaisseur de la tôle d'acier, et qui recouvre le bord de la tôle.

6. Remorque selon la revendication 4 ou 5, caractérisée en ce que la jonction est constituée par des points de soudure (47, 48, 49, 50).

7. Remorque selon l'une des revendications 1 à 6, caractérisée en ce que la paroi supérieure (32) du repli contre lequel s'applique la face supérieure (4a) du fond (4) est formée par le côté inférieur du canal inférieur (9), et la paroi latérale (31) du repli, contre laquelle s'applique la surface latérale du fond, par un doublage (31, 29) de la tôle d'acier.

8. Remorque selon l'une des revendications 1 à 7, caractérisée en ce que, pour la fixation du fond (4), des vis de traversée (51) sont utilisées, celles-ci traversant des trous (52, 53) dans le fond et dans la paroi inférieure (32) du canal inférieur et se vissant dans des écrous (57) qui se trouvent dans l'intérieur du canal.

9. Remorque selon la revendication 8, caractérisée en ce que les écrous (57) reposent sur des pièces de transmission de pression (54) qui se trouvent dans l'intérieur du canal, lesdits écrous (57) étant maintenus, de préférence sans pouvoir tourner, sur ces pièces de transmission de pression (54).

10. Remorque selon l'une des revendications 1 à 9, caractérisée en ce que la face intérieure des parois de côté (5a, 5b, 6, 7) est sensiblement plane et en ce que les canaux (8, 9) font saillie sur la face extérieure des parois de côté (5a, 5b, 6, 7).

11. Remorque selon l'une des revendications, 1 à 10, caractérisée en ce que les canaux (8, 9) ont des parois latérales parallèles (11, 13 ou 29, 33) qui sont parallèles au plan général de la paroi de côté; en ce que le canal supérieur (8) comporte une paroi supérieure (12), et le canal inférieur (9), une paroi inférieure (32), lesquelles sont dirigées orthogonalement au plan général de la paroi de bord; et en ce qu'une paroi oblique (14, 28) faisant un angle obtus par rapport à la paroi latérale extérieure (13, 29) du canal est chaque fois en regard, avec la paroi supérieure (12) de canal ou avec la paroi inférieure (32) de canal.

12. Remorque selon l'une des revendications 1 à 11, caractérisée en ce que les canaux (8, 9) ont une largeur réduite aux extrémités et sont enserrés, dans la région réduite, par des pièces d'angle (60, 61) profilées.

13. Remorque selon l'une des revendications 1 à 12, caractérisée en ce que des tôles pleines (67) sont préves dans les régions des angles, ces tôles (67) s'appliquant par une aile (67a) contre des pièces d'angle profilées (60, 61) qui relient des parois de côté orthogonales, et étant adaptées par le bord d'extrémité (67'b) d'une autre aile (67b) au contour extérieur des parois de côté.

14. Remorque selon l'une des revendications 1 à 13, caractérisée en ce que la grandeur de l'épaisseur (s) de la tôle des parois de côté est dans l'intervalle de 0,8 à 1,5 mm, et de préférence d'environ 1,25 mm.

EP 0 235 330 B1

Fig.1

Fig.2

Fig. 3

*Fig. 4*

_Fig. 5_

_Fig.6_

_Fig.7_

_Fig.8_